# EUROPÄISCHE PATENTSCHRIFT

(11) **EP 1 588 234 B1**
(45) Veröffentlichungstag und Bekanntmachung des Hinweises auf die Patenterteilung: **01.08.2007**
(21) Anmeldenummer: 04703766.8
(22) Anmeldetag: 21.01.2004
(51) Int. Cl.: G06F 1/00

(54) **ZUORDNUNG VON VERTEILUNGSGEWICHTEN ZU VERBINDUNGSABSCHNITTEN IN EINEM PAKETNETZ MIT VERKEHRSVERTEILUNG**
ALLOCATION OF DISTRIBUTION WEIGHTS TO LINKS IN A PACKET NETWORK COMPRISING TRAFFIC DISTRIBUTION
AFFECTATION DE POIDS DE DISTRIBUTION AUX LIENS D'UN RESEAU A COMMUTATION PAR PAQUETS AVEC DISPERSION DU TRAFIC

(30) Priorität: 28.01.2003 DE 10303262
(43) Veröffentlichungstag der Anmeldung: 26.10.2005
(73) Patentinhaber: SIEMENS AKTIENGESELLSCHAFT, 80333 München (DE)
(72) Erfinder: SCHOLLMEIER, Gero, 82131 Gauting (DE); WINKLER, Christian, 80339 München (DE)
(86) Internationale Anmeldenummer: PCT/EP2004/000467
(87) Internationale Veröffentlichungsnummer: WO 2004/068258

(56) Entgegenhaltungen:
- US-A- 5 872 773
- ABRAHAMSSON H ET AL: "A multi-path routing algorithm for IP networks based on flow optimisation" FROM QOS PROVISIONING TO QOS CHARGING. THIRD COST 263 INTERNATIONAL WORKSHOP ON QUALITY OF FUTURE INTERNET SERVICES;QOFIS 2002 AND SECOND INTERNATIONAL WORKSHOP ON INTERNET CHARGING AND QOS TECHNOLOGIES, ICQT 2002. PROCEEDINGS (LECTURE NOTES IN COMPU, Seiten 135-144, XP002280152 2002, Berlin, Germany, Springer-Verlag, Germany ISBN: 3-540-44356-8
- BEN-AMEUR W ET AL: "Routing strategies for IP networks" TELEKTRONIKK, 2001, TELENOR COMMUNICATIONS AS, NORWAY, Bd. 97, Nr. 2-3, Seiten 145-158, XP002280153 ISSN: 0085-7130
- SCHOONDERWOERD R ET AL: "ANT-BASED LOAD BALANCING IN TELECOMMUNICATIONS METWORKS" ADAPTIVE BEHAVIOR, MIT PRESS, CAMBRIDGE, MA, US, US, Bd. 5, Nr. 2, 21. September 1996 (1996-09-21), Seiten 169-207, XP000656299 ISSN: 1059-7123
- CASELLAS R ET AL: "Packet based load sharing schemes in MPLS networks" 2ND EUROPEAN CONFERENCE ON UNIVERSAL MULTISERVICE NETWORKS. ECUMN'2001 (CAT. NO.02EX563), PROCEEDINGS OF ECUMN 2002- 2ND IEEE EUROPEAN CONFERENCE ON UNIVERSAL MULTISERVICE NETWORKS, COLMAR, FRANCE, 8-10 APRIL 2002, Seiten 18-28, XP002280154 2002, Piscataway, NJ, USA, IEEE, USA ISBN: 0-7803-7422-3

## Beschreibung

Das vielleicht wichtigste Aufgabenfeld für Vermittlungstechniker, Netzwerkspezialisten und Internetexperten besteht derzeit in der Realisierung von Echtzeitdatenverkehr über paketorientierte Netze. Vor allem Sprachdaten - in diesem Zusammenhang ist oft von Voice over IP die Rede - aber auch Videoinformationen, sollen in Echtzeit und mit hoher Dienstgüte über Paketnetze, vordringlich IP-Netze, übertragen werden können. Die hohe Flexibilität des Internets, die im Wesentlichen auf lokalen Routingentscheidungen und einer "best effort"-Übertragung von Daten beruht, stellt für die Übertragung von Echtzeitverkehr ein Handicap dar. In klassischen IP-Netzen, wie dem Internet, können auf Grund der obigen Eigenschaften keine Garantien für die Dienstgüte einer Datenübertragung - man spricht häufig von quality of service - gewährleistet werden. Im Allgemeinen sind die Verzögerungszeiten bei der Datenübertragung für Sprachübertragung noch zu hoch. Zudem kann es zu Engpässen kommen, die für eine ungleichmäßige Qualität des Dienstes verantwortlich sind, und welche für Datenübertragung tolerierbar, für Sprachübertragung jedoch nicht akzeptabel ist. Daher wird an Weiterentwicklungen von IP-Netzen gearbeitet, die die Einhaltung von Dienstgütemerkmalen ermöglichen sollen.

Ein wichtiger Ansatz für die Übertragung von Echtzeitverkehr über paketbasierte Netze ist das sogenannte DiffServ-Konzept. Im Rahmen dieses Konzeptes werden in ein Netz eintretende Datenpakete am Netzrand entsprechend Dienstklassen markiert, und beim Routing innerhalb des Netzes entsprechend der Dienstklasse behandelt. Man spricht hier auch von classes of service. Für die Übertragung von Sprachinformationen kann eine Einteilung in eine entsprechende class of service vorgenommen werden, so dass die zugehörigen Datenpakete beim Routing innerhalb des Netzes priorisiert behandelt werden. Dieses Verfahren erlaubt die Behandlung beim Routing des Echtzeitverkehrs und damit bessere Dienstgüteeigenschaften dieses hochpriorisierten Verkehrs als bei herkömmlichen IP-Netzen. Die relative Dienstgüte entsprechend klassifizierten Verkehrs wird besser. Absolute Dienstgütemerkmale können aber nicht garantiert werden. Eine relative Besserstellung von Verkehrsklassen ist unzureichend im Hinblick auf einzuhaltende absolute Grenzen, wie zum Beispiel einer maximalen Verzögerungszeit bei der Übertragung von Sprachinformationen oder einer Maximalverlustrate bei der Übertragung von Videodaten.

Ein zweites wichtiges Konzept ist das sogenannte MPLS (Multi Protocol Label Switching)-Verfahren in dem feste Verbindungen durch ein Paketnetz geschaltet werden. Das MPLS-Verfahren erlaubt zwar so die Reservierung von Bandbreite für Verkehr mit hohen Dienstgüteanforderungen. Dieser Vorteil wird jedoch erkauft durch die Aufgabe eines großen Teils der Flexibilität des herkömmlichen Internets.

In dem Dokument "A multi-path routing algorithm for IP networks based on flow opimisation" von Abrahamsson H. et al. (Lecture Notes in Compu, Seiten 135-144, XP002280152 2002, Berlin, Germany, Springer-Verlag, ISBN: 3-540-44356-8) ist ein Verfahren bekannt, durch welches Linkgewichte im Zuge einer auf des gesamte Netz bezogenen Optimierung der Verkehrsverteilung bestimmt werden.

Die Erfindung hat zur Aufgabe ein Verfahren für ein verbessertes Routing durch ein Paketnetz anzugeben.

Die Aufgabe wird durch Verfahren entsprechend Anspruch 1 und 3 gelöst.

Zum besseren Verständnis des erfindungsgemäßen Verfahrens wird im Folgenden kurz ein Konzept zur Gewährleistung von Quality of Service-Übertragung über Paketnetze dargestellt, für welches das erfindungsgemäße Verfahren eingesetzt werden kann. Das Konzept zielt auf eine Übertragung von Daten unter Einhaltung von Dienstgütemerkmalen über ein Paketnetz ab, ohne dafür zuviel der inhärenten Flexibilität herkömmlicher Datennetze aufzugeben. Das Konzept beruht unter anderem auf folgenden zwei Punkten:
1. Für die Vermeidung von Überlastsituationen innerhalb eines Paketnetzes wird das Gesamtvolumen des Verkehrs beschränkt, indem am Netzrand der ein- und austretenden Verkehr überwacht und bei Überschreiten eines Schwellenwerts beschränkt wird.
2. Innerhalb des Paketnetzes werden Engpässe vermieden, indem der Verkehr innerhalb des Netzes verteilt wird.

Die Beschränkung der Gesamtverkehrsmenge sowie die flexible Verteilung des Verkehrs innerhalb des Netzes, erlaubt eine Kontrolle über Übertragung von Datenverkehr über das Netz, welche bei geeigneter Wahl von Parametern die Gewährleistung von Dienstgütemerkmalen - wie zum Beispiel die Einhaltung bestimmter Grenzen - mit hoher Wahrscheinlichkeit ermöglicht.

Bei der Verkehrsverteilung kann man beispielsweise den zwischen Paaren von Eingangs- und Ausgangsknoten durch das Netz übertragenen Verkehr betrachten. Für diesen Verkehr stehen dann verschiedene Routen zur Verfügung, über die der Verkehr verteilt wird. Für einen Eingangsknoten kann man für jeden Knoten des Netzes, über den über den Eingangsknoten in das Netz gelangter Verkehr übertragen wird, die Gesamtmenge der Verbindungsabschnitte betrachten, über die von dem Knoten weitergeleitete Datenpakete zum Ausgangsknoten gelangen können. Diese Gesamtmenge der auf den Knoten bezogenen, zum Ausgangsknoten hinführenden und von Eingangs- und Ausgangsknoten abhängenden Verbindungsabschnitten, wird im Folgenden als "Verteilungsfächer" bezeichnet. Der Begriff "Verbindungsabschnitt" (in der Literatur wird auch häufig der Begriff "link" verwendet), wird hier als logischer Begriff verwendet, dem eine physikalische Verbindung zwischen zwei Knoten und eine Richtung zugeordnet ist. Einen physikalischen Verbindungsabschnitt mit Duplexverkehr-Gesprächen, entsprechen also nach dem hier verwendeten Sprachgebrauch zwei in entgegengesetzte Richtung zeigende Verbindungsabschnitte.

Das erfindungsgemäße Verfahren erstrebt eine Anpassung von Verteilungsgewichten in einem mit Knoten und Verbindungsabschnitten gebildeten Paketnetz. Dabei wird in dem Paketnetz Verkehrsverteilung mit Hilfe von Verteilungsfächern vorgenommen. Bei einem ersten erfindungsgemäßen Verfahren zur Vermeidung einer Überlast auf einem Knoten des Netzes, wird die gesamte von dem Knoten wegführende oder zu dem Knoten hinführende Verkehrslast bestimmt und überprüft, ob die gesamte Verkehrslast einen Schwellenwert überschreitet. Bei Überschreiten des Schwellenwertes werden Verteilungsgewichte an den Knoten vorgelagerten Verbindungsabschnitten, die einen den Knoten beinhaltenden Verteilungsfächern zugehören, so angepasst, dass der über den Knoten gelenkte Verkehr erniedrigt wird. Wenn zum Beispiel einer dem überlastenden Knoten vorgelagerter Knoten drei alternative wegführende Verbindungsabschnitte aufweist, die demselben Verteilungsfächer angehören und zu verschiedenen Knoten führen, kann das Verteilungsgewicht der beiden nicht zu den überlastenden Knoten führenden Verbindungsabschnitte erhöht und das Verteilungsgewicht des zu den überlastenden Knoten führenden Verbindungsabschnitts entsprechend erniedrigt werden. Dieses Verfahren kann für alle Knoten des Paketnetzes solange durchgeführt werden, bis die Knoten den Schwellenwert unterschreiten oder ein Abbruchkriterium erfüllt ist.

In einer leichten Abwandlung kann das Verfahren im Sinne der Reduzierung der Last eines Verbindungsabschnitts des Paketnetzes angewendet werden. Dabei wird für den Verbindungsabschnitt die gesamte Verkehrslast bestimmt und überprüft, ob die gesamte Verkehrslast einen Schwellenwert überschreitet. Bei Überschreiten des Schwellenwertes werden Verteilungsgewichte von Verbindungsabschnitten, die einem, dem Verbindungsabschnitt beinhaltenden Verteilungsfächer zugehören, so angepasst, dass der über den Verbindungsabschnitt gelenkte Verkehr abgesenkt wird. Beispielsweise ist der betroffene Verbindungsabschnitt einer von drei einem Verteilungsfächer zugehörigen, von denselben Knoten wegführenden Verbindungsabschnitte. Es kann dann das Verteilungsgewicht des betroffenen Verbindungsabschnitts zu Ungunsten der andern beiden Verbindungsabschnitte reduziert werden. Analog dem Verfahren zur Reduzierung der über einen Knoten geleiteten Verkehrsmenge kann das Verfahren auch für alle Verbindungsabschnitte des Datennetzes solange durchgeführt werden, bis für alle Verbindungsabschnitte der Schwellenwert unterschritten oder ein Abbruchkriterium erfüllt ist.

Generell kann die Anpassung von Verteilungsgewichten zur Reduzierung der Last eines Verbindungsabschnitts oder Knoten beendet werden, wenn der Schwellenwert unterschritten wird. Der Schwellenwert für einen Knoten ist beispielsweise durch den mit einem Faktor multiplizierten Wert der Bandbreite der Gesamtheit der von dem Knoten wegführenden oder zu dem Knoten hinführenden Verbindungsabschnitte gegeben. Für Verbindungsabschnitte kann als Schwellenwert die mit dem Faktor multiplizierte Bandbreite des Verbindungsabschnitts verwendet werden. Der Faktor liegt dabei zwischen 0 und 1. In einer bevorzugten Ausführung ist der Faktor nahe bei 1. Durch die Multiplikation der Bandbreite mit einem Faktor < 1 wird für eine Reserve bei der Auslastung des Paketnetzes gesorgt. Es kann nicht erwartet werden, dass eine perfekte Verkehrsverteilung über das Netz stattfindet, so dass eine planmäßige Ausnützung der Bandbreite zu 100% Verstopfungen hervorrufen kann.

Die Bestimmung der Verkehrslast über einzelne Links oder Knoten, kann mit Hilfe einer Verkehrsmatrix vorgenommen werden. Eine solche Verkehrsmatrix kann beispielsweise den "worst case", das heißt, den Fall der größten Verkehrsbelastung zur Grundlage haben, oder aber auch dynamisch beziehungsweise mitlaufend in regelmäßigen Abständen für eine Neuregulierung der Verteilungsgewichte bestimmt werden. Eine Zuteilung von Verteilungsgewicht in einen durch viele Knoten im Verbindungsabschnitt gebildete Netze, ist eine komplexe Aufgabe. Eine Berechnung der Verteilungsgewichte anhand der Bandbreiten der Verbindungsabschnitte des Paketnetzes und einer Verkehrsmatrix führt in der Regel zu einem System von sehr vielen nicht linearen Gleichungen, das in der Regel auch numerisch nicht eindeutig exakt lösbar ist. Das erfindungsgemäße Verfahren stellt ein aufwandsarmes, realistisches Verfahren dar, mit dem Verteilungsgewichte für eine effiziente Verkehrsverteilung innerhalb eines Paketnetzes realisiert werden kann. Vor allem im Hinblick auf die Einhaltung von Dienstgütekriterien mit Hilfe von Beschränkung des Gesamtverkehrsvolumens und einer effizienten Verteilung des Verkehrs innerhalb des Netzes, liefern die erfindungsgemäßen Verfahren einen wichtigen Beitrag für eine optimale Verteilung des Verkehrs anhand von Gewichtsfaktoren innerhalb des Netzes.

Bei einer vorteilhaften Weiterbildung wird bei der Erniedrigung der Verkehrslast eines Verbindungsabschnittes diese dadurch erzielt, dass der über den Verbindungsabschnitt vorgelagerten Knoten geführte Verkehr gemäß dem ersten erfindungsgemäßen Verfahren erniedrigt wird. Die Erniedrigung der Verkehrslast des Verbindungsabschnittes über vorgelagerten Knoten ist besonders dann sinnvoll, wenn die Anpassung der Gewichte zwischen Verbindungsabschnitten des Verteilungsfächers nicht zu einer Absenkung unter den Schwellenwert geführt hat. Durch die erfindungsgemäße Verschiebung und Umverteilung von Verteilungsgewichten wird auf die Verkehrslast im Netz verlagert. Wenn diese Verlagerung der Verkehrslast zur Einhaltung der Kriterien beziehungsweise des Schwellenwerts für jeden Verbindungsabschnitt beziehungsweise jeden Knoten des Netzes führt, kann das Verfahren angehalten werden. Es ist jedoch auch möglich, dass das Verfahren nicht oder nicht schnell konvergiert, das heißt, eine Unterscheidung des Schwellenwerts für alle Verbindungsabschnitte beziehungsweise Knoten nicht bei einer akzeptablen Anzahl von Iterationen erreicht wird. Es können dann verschiedene Abbruchkriterien verwendet werden. Abbruchkriterien sind:
1. Bei einem oder mehreren Durchläufen über alle Knoten beziehungsweise Verbindungsabschnitte des Netzes erniedrigt sich die Anzahl der Knoten beziehungsweise Verbindungsabschnitte nicht, deren Verkehrslast den Schwellenwert überschreitet.
2. Die Summe der Quadrate der Differenz zwischen gesamter Verkehrslast und Schwellenwert summiert über alle Knoten beziehungsweise Verbindungsabschnitte, deren Verkehrslast den Schwellenwert überschreitet, erniedrigt sich bei einem oder mehreren Durchläufen nicht.
3. Eine maximale Anzahl an Durchläufen wurde durchgeführt, dass heißt, wenn die Anzahl der Iterationen einen vorgegebenen Höchstwert erreicht, wird abgebrochen.

Die erfindungsgemäßen Verfahren führen zu einer Umordnung beziehungsweise Anpassung der Verteilungsgewichte im Sinne einer gleichmäßigen Verkehrsverteilung. Um eine Umordnung vornehmen zu können, muss anfänglich der Wert der Verteilungsgewichte von Knoten und Verbindungsabschnitte initialisiert werden, das heißt, Startwerte müssen zugewiesen werden. Eine geschickte Zuteilung von Startwerten ist wichtig hinsichtlich einer Stellenkonvergenz des Verfahrens, wobei als Konvergenz das Unterschreiten des Schwellenwertes für alle Knoten beziehungsweise Verbindungsabschnitte bezeichnet wird. Eine Initialisierung der Verteilungsgewichte kann beispielsweise durch Zuweisung von Startwerten geschehen, wobei für einen Knoten die demselben Verteilungsfächer angehörigen, von den Knoten wegführenden oder zu ihm hinführenden Verbindungsabschnitte Verteilungsgewicht je nach Maßgabe ihrer relativen Bandbreite zugewiesen bekommen. Diese Zuweisung von Startwerten kann noch verbessert werden, indem eine relative Anpassung von Verteilungsgewichten eines Verteilungsfächers nach Maßgabe der Anzahl an Verbindungsabschnitten innerhalb eines Verteilungsfächers über die Pakete von den Verbindungsabschnitten zu einem Ziel übertragen werden müssen, im Sinne einer Reduzierung der Anzahl von Verbindungsabschnitten vorgenommen wird. Diese Verbesserung zielt auf eine Reduzierung der Strecke innerhalb des Netzes ab, über die Verkehr im Paketnetz geleitet wird. Offensichtlich ist es sinnvoll, innerhalb eines Verteilungsfächers, der die möglichen Pfadalternativen für festen Eingangs- und Ausgangsknoten zugehörigen Verkehr festgelegt, die Pfade beziehungsweise Wege zu bevorzugen, die über möglichst wenig Verbindungsabschnitte führen. Eine Reduzierung der im Netz zurückgelegten Strecke führt zu einer Reduzierung des Verkehrsaufkommens im Netz, wobei Überlastung einzelner Verbindungsabschnitte vermieden werden muss, was durch die Einführung eines Schwellenwertes gewährleistet wird.

Sinnvoll ist es zudem, zusätzlich eine Gesamtlastüberprüfung des Paketnetzes vorzunehmen, um Situationen, bei denen ob der Gesamtlast die erfindungsgemäßen Verfahren nicht konvergieren, von vornherein auszuselektieren. Bei der Gesamtlastüberprüfung des Paketnetzes wird z.B. für jeden Randknoten des Netzes der gesamte, über den Randknoten in das Paketnetz eintretende und der über ihn austretende Verkehr ermittelt. Dies kann beispielsweise auch mit Hilfe der Verkehrsmatrix geschehen. Dann wird der gesamte, über den Randknoten des Netzes eintretende beziehungsweise austretende Verkehr mit dem mit einem Faktor multiplizierten Wert der Bandbreite der Gesamtheit der von dem Knoten wegführenden beziehungsweise zum Randknoten hinführenden Verbindungsabschnitte verglichen. Dabei ist der Faktor die Zahl zwischen 0 und 1. Das Verfahren wird abgebrochen, wenn der gesamte über den Randknoten des Netzes eintretende beziehungsweise austretende Verkehr, die mit dem Faktor zwischen 0 und 1 multiplizierte gesamte Bandbreite der vom Randknoten wegführenden beziehungsweise zum Randknoten hinführenden Verbindungsabschnitte überschreitet. Auf diese Weise werden Situation vermieden, bei denen bei Randknoten eine Verkehrsüberlast auftritt, die auch zu einem zu hohen Gesamtvolumen des Verkehrs innerhalb des Netzes führen kann.

Eine direkte Überprüfung der Gesamtverkehrsmenge wird durch eine weitere Weiterbildung realisiert. Dabei wird mit Hilfe einer Verkehrsmatrix an den anfänglich zugewiesenen Verteilungsgewichten das Gesamtvolumen des Verkehrs über alle Netzwerkabschnitte berechnet und das Verfahren abgebrochen, wenn das Gesamtvolumen die gesamte, über alle Netzwerke summierte und mit dem Faktor zwischen 0 und 1 multiplizierte Bandbreite der Verbindungsabschnitte des Paketnetzes überschreitet.

Bei einer bevorzugten Ausführungsvariante sind zwei wegführende Verbindungsabschnitte für jeden inneren Knoten des Netzes vorgesehen.

Im Folgenden werden die erfindungsgemäßen Verfahren im Rahmen eines Ausführungsbeispiels anhand einer Figur näher erläutert.

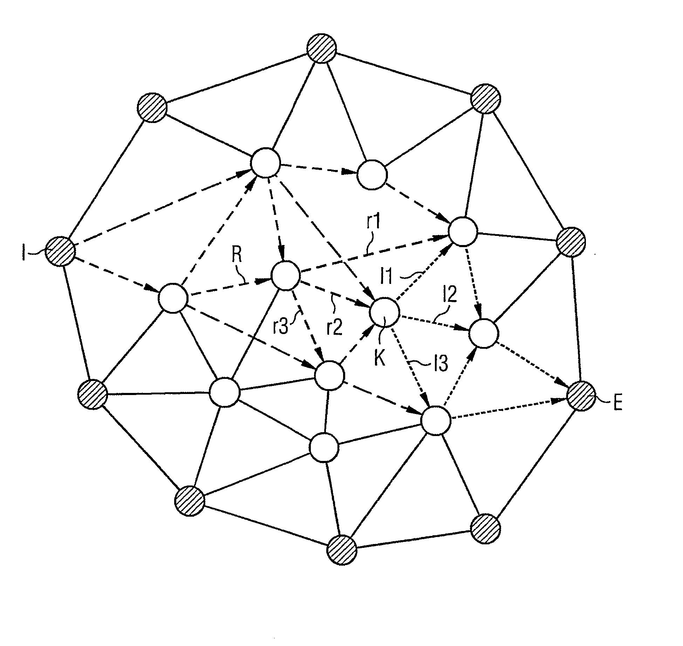

Die Figur zeigt ein mit Knoten und Verbindungsabschnitten gebildetes Netz. Randknoten sind dabei durch gefüllte Kreise und innere Knoten durch gewöhnliche Kreise dargestellt. Verbindungsabschnitte.sind durch Knoten verbindende Linien oder Pfeile repräsentiert.

Für den Eingangsknoten I und den Ausgangsknoten E ist ein Verteilungsfächer dargestellt, der die durch gestrichelte und gepunktete Pfeile dargestellten Verbindungsabschnitte umfasst. Der Verteilungsfächer umfasst zudem die inneren Knoten R und K. Für den Knoten K ist ein Verteilungsfächer gezeigt, der die gestrichelten Verbindungsabschnitte enthält. Der Verteilungsfächer umfasst die von dem Knoten K wegführenden Links (Verbindungsabschnitte) 11, 12 und 13. Von dem dem Knoten K vorgelagerten Knoten R führen die Links r1, r2 und r3 weg. Für das Ausführungsbeispiel werden folgende Begriffe eingeführt:
- Hammock-sd: Die Menge aller im Mehrwege-Routing enthaltenen Wege von einem Eingangsknoten s des Netzes zu einem Ausgangsknoten d. Ein Hammock-sd entspricht einem Verteilungsfächer zwischen zwei Randknoten, z.B. den Randknoten I und E.
- Fan-isd: Knoten i ist Teil des Hammock-sd. Fan-isd ist der Wegefächer des Knotens i, den er in Richtung des Ziels zur Verfügung hat (der Ausschnitt des Knotens i aus dem Hammock-sd, bestehend aus mehreren Ausgangslinks). Z.B. ist der Knoten K Teil des durch die Randknoten I und E definierten Hammock-sd. Der Fan-isd für den Knoten K besteht dann aus den Links 11, 12 und 13.
- Reserve a: Ein Link soll nur zum a-fachen (a<1) seiner Bandbreite mit Verkehr belastet werden, um eine gewisse Reserve zu erhalten. Es findet so eine Überdimensionierung des Netzes zum Zwecke eines Überlastschutzes statt.

Für das Ausführungsbeispiel sollen folgende Ausgangsannahmen gelten:
- Es liegt eine Verkehrsmatrix für das Netz vor. Sie listet die jeweiligen Verkehrsmengen zwischen allen Randknoten des Netzes auf.
- Alle Mehrwege-Routen (Hammocks) sind bestimmt und liegen vor

Es wird vorgeschlagen, eine Zuweisung der Verteilgewichte zu den einzelnen Links wie folgt durchzuführen:
1. Es wird für jeden Randknoten (z.B. Randknoten I und E) des Netzes geprüft, ob er den bei ihm ankommenden und von ihm abgehenden Summenverkehr über seine Links überhaupt tragen kann. Dazu wird der abgehende Verkehr aus der Verkehrsmatrix für den jeweiligen Randknoten aufsummiert und mit dem a-fachen der Summe seiner abgehenden Link-Bandbreite verglichen. Analog für den kommenden Verkehr. Liegt eine Überschreitung vor, so ist das Netz unterdimensioniert und das Verfahren wird angehalten.
2. Zur Initialisierung wird für jeden Hammock im Netz an jedem Knoten i im Hammock-sd für jeden Link k des Fan-isd das Verteilgewicht w_{i,sd,k} proportional zur Bandbreite des jeweiligen Links gewählt (normiert, so dass die Summe der Verteilgewichte für Fan-isd eins ergibt). Beispielsweise werden Verteilungsgewichte für die Links 11, 12 und 13 proportional ihrer bandbreite festgelegt.
3. Mit den nach Schritt 1.vorläufig festgelegten Gewichten wird auf der Basis der Verkehrsmatrix die Verkehrslast jedes Links berechnet (Aufsummieren der Verkehrsanteile aller Hammocks).
4. Als heuristischen Test auf eine ausreichende Dimensionierung des Netzes (bei gegebenem Routing) wird der so berechnete Verkehr aller Links aufsummiert und mit dem a-fachen der Summe der Bandbreiten aller Links verglichen. Liegt hier eine Überschreitung vor, so ist das Netz unterdimensioniert und das Verfahren wird angehalten.
5. Für jeden Knoten des Netzes wird überprüft, ob die Summe des nach Schritt 3. berechneten Verkehrs über alle seine Ausgangslinks die a-fache Summe der Bandbreite der Ausgangslinks übersteigt. Beispielsweise wird für den Knoten K der Verkehr über die Links 11, 12 und 13 aufsummiert. Ist dies der Fall, so kann der Knoten den ihm zugewiesenen Summenverkehr nicht tragen. Der Verkehr muss auf andere Knoten im Netz verteilt werden:
   - Für jeden solcherart "überlasteten" Knoten werden schrittweise die Verteilgewichte bei einzelnen oder allen Vorgängerknoten für einzelne oder alle Fans-isd, welche Links in Richtung des betroffenen Knotens enthalten, derart verschoben (normiert, so dass die Summe der Verteilgewichte für Fan-isd eins ergibt), dass die Links in Richtung des betroffenen Knotens so weit entlastet werden, bis die unter 5. angegebene Bedingung erfüllt ist. So werden beispielsweise bei Überlastung des Knoten K die Verteilungsgewichte der Ausgangslinks r1, r2 und r3 des Knotens R angepasst. Das Gewicht des (zu Knoten K führenden) Links 12 wird erniedrigt, während die Gewichte der Links 11 und 13 entsprechend erhöht werden.
   - Schritt 5 wird so lange wiederholt, bis entweder kein weiterer überlasteter Knoten gefunden wird oder gemäß eines geeigneten Abbruchkriteriums die "Unlösbarkeit" festgestellt wird. In letzterem Fall wird das Verfahren angehalten.
6. Für jeden Link im Netz wird geprüft, ob die nach Schritt 3. berechnete Verkehrslast das a-fache seiner Kapazität übersteigt. Ist dies der Fall, so ist der Link (unter Berücksichtigung der "Reserve") überlastet und der Verkehr an diesem Knoten muss auf andere Links umverteilt werden.
   - Für jeden solcherart "überlasteten" Link an Knoten i wird schrittweise das Verteilgewicht in einzelnen oder allen Fans-isd, die diesen Link enthalten, reduziert (normiert, so dass die Summe der Verteilgewichte für Fan-isd weiterhin eins ergibt - folglich wird das Gewicht bei den anderen Links im Fan-ist entsprechend erhöht), bis die gewünschte Reserve a erreicht ist. Z.B. werden bei Überlastung des Links 12 die relativen Gewichte der links 11 und 13 erhöht.
   - Dabei wird bei der Umverteilung darauf geachtet, dass die anderen Links des Fan-isd durch die Umverteilung nicht ihrerseits das Limit "a-fache Bandbreite" überschreiten. Bevorzugt werden schwach ausgelastete Links zur Aufnahme von Verkehr herangezogen.
   - Sollten auf diese Weise nicht für alle Links die entsprechende Reserve erzielbar sein, so ist der bei dem betroffenen Knoten ankommende Verkehr zu hoch. Dann sind (analog Schritt 5.) in den Vorgängerknoten (z.B. Knoten R) die Verteilgewichte (z.B. r1, r2 und r3) derart zu modifizieren, dass die Verkehrsmenge von diesen Vorgängern über den betroffenen Link entsprechend reduziert wird.
   - Bei jedem Durchlauf von Schritt 6. wird zunächst analog Schritt 5. der "Knotentest" für den Knoten durchgeführt, an dem der zu entlastende Link anliegt. Durch die Umverteilung des Verkehrs in vorangegangenen Durchläufen könnte an einzelnen Knoten eine Überlastung entstanden sein, die Schritt 6. für diesen Knoten prinzipiell unlösbar macht. Ist dies bei einem Knoten der Fall, so wird er gemäß Schritt 5. behandelt.
   - Schritt 6 wird so lange wiederholt, bis entweder kein weiterer überlasteter Link mehr gefunden wird oder gemäß eines geeigneten Abbruchkriteriums die "Unlösbarkeit" festgestellt wird. In letzterem Fall wird das Verfahren angehalten.

Die Schritte 5. und 6. werden in der Regel mehrmals durchlaufen, bis eine befriedigende Netzauslastung erreicht ist. Abbruchkriterien für die Schleife sind u.a.:
- Wenn sich bei einem Durchlauf über das ganze Netz die Anzahl der den Wert a (Grenzwert für die Bandbreitenauslastung) überschreitenden Links (bzw. Knoten bei Schritt 5.) nicht erniedrigt, und/oder
- Wenn sich bei einem Durchlauf das Quadrat der positiven Abweichungen von a nicht erniedrigt (d.h. der Zielwert für die Netzauslastung wird überschritten) und / oder
- Wenn eine vorgegebene Anzahl von Durchläufen erreicht wurde.

Falls die Zielwerte, d.h. Bruchteil a der Bandbreite, nicht für alle Links erreicht werden oder zumindest für einen geforderten Anteil dieser Links), so ist eine Erhöhung der Bandbreite bei einem oder mehreren Links erforderlich

Mit dem beschriebenen Verfahren wird erreicht, das alle Links im Regelfall gleichmäßig ausgelastet werden und insbesondere auch gleich große relative Reserve für Spitzenlasten (bezogen auf die jeweilige Linkbandbreite) aufweisen und so eine optimale Verkehrsverteilung ermöglichen.

Statt des hier vorgeschlagenen heuristischen Verfahrens zu Optimierung der Netzauslastung sind auch andere etablierte Optimierungsverfahren alternativ oder ergänzend einsetzbar, die jedoch in der Regel einen hohen Rechenaufwand erfordern. Statt der gleichmäßigen Netzauslastung sind als Zielgröße auch andere Kriterien denkbar, z.B. gezielte Konzentration des Verkehr auf spezielle, z.B. besonders zuverlässige Links oder Optimierung des zulässigen Anteils an Verkehr hoher Priorität oder Minimierung der Kosten.

Mögliche Erweiterungen:
- Wo es im Hinblick auf den Rechenaufwand praktikabel ist, können auch an sich bekannte Optimierungsverfahren wie das Gradienten-Verfahren oder Varianten davon (z.B. Fletcher / Reeves, Fletcher / Powell) für die Nachoptimierung der Verteilgewichte eingesetzt werden.
- Bei der Start-Zuordnung der Gewichte kann die Anzahl der Hops berücksichtigt werden, die im Fan-isd über den jeweiligen Link k bis zum Ziel erforderlich sind, z.B. Verringerung der Gewichte in umgekehrten Verhältnis zur Anzahl der Hops. Dadurch wird die Summenbelastung des Netzes reduziert.
- Bei der anfänglichen Verteilung der Gewichte kann Verkehr zwischen Nachbarknoten über einen Direkt-Link verstärkt bewertet werden, um auch so eine höhere Belastung des Netzes zu minimieren.
   Das Verfahren ist nicht auf die im Ausführungsbeispiel vorgestellte Reihenfolge oder Kombination von Schritten beschränkt.

## Patentansprüche

1. Verfahren zur Anpassung von Verteilungsgewichten für eine eine Überlast eines Knoten (K) vermeidende Verkehrsverteilung in einem Paketnetz, wobei das Paketnetz mit Knoten (I, E, R, K) und Verbindungsabschnitten (11, 12, 13, r1, r2, r3) gebildet ist und in dem Paketnetz Verkehrsverteilung mit Hilfe von Verteilungsfächern vorgenommen wird, bei dem
- für jeden Knoten (K) des Paketnetzes
-- die gesamte Verkehrslast für die von dem Knoten (K) wegführenden oder die zu dem Knoten (K) hinführenden Verbindungsabschnitte (11, 12, 13) ermittelt wird,
-- überprüft wird, ob die gesamte Verkehrslast der wegführenden bzw. hinführenden Verbindungsabschnitte (11, 12, 13) einen Schwellenwert überschreitet,
-- bei Überschreiten des Schwellenwertes Verteilungsgewichte von Verbindungsabschnitten (r1, r2, r3), die einen den Knoten (K) beinhaltenden Verteilungsfächer zugehören, so angepasst werden, dass der über den Knoten (K) gelenkte Verkehr erniedrigt wird,
- bis für alle Knoten (I, E, R, K) des Paketnetzes der Schwellenwert unterschritten ist oder ein Abbruchkriterium erfüllt ist.

2. Verfahren zur Anpassung von Verteilungsgewichten für eine eine Überlast eines Verbindungsabschnitts (12) vermeidende Verkehrsverteilung in einem Paketnetz, wobei das Paketnetz mit Knoten (I, E, R, K) und Verbindungsabschnitten (11, 12, 13, r1, r2, r3) gebildet ist und Verkehrsverteilung mit Hilfe von Verteilungsfächern vorgenommen wird, bei dem
- für jeden Verbindungsabschnitt (11, 12, 13, r1, r2, r3) des Paketnetzes
-- für den Verbindungsabschnitt (12) die gesamte Verkehrslast ermittelt wird,
-- überprüft wird, ob die gesamte Verkehrslast einen Schwellenwert überschreitet, und
-- bei Überschreiten des Schwellenwertes Verteilungsgewichte von Verbindungsabschnitten (11, 13), die einen den Verbindungsabschnitt (12) beinhaltenden Verteilungsfächer zugehören, so angepasst werden, dass der über den Verbindungsabschnitt (12) gelenkte Verkehr abgesenkt wird,
- bis für alle Verbindungsabschnitte (11, 12, 13, r1, r2, r3) des Paketnetzes der Schwellenwert unterschritten ist oder ein Abbruchkriterium erfüllt ist.

3. Verfahren nach einem der Ansprüche 1 bis 2,
**dadurch gekennzeichnet,**
- **dass** die Anpassung von Verteilungsgewichten beendet wird, wenn der Schwellenwert unterschritten wird.

4. Verfahren nach einem der vorhergehenden Ansprüche,
**dadurch gekennzeichnet,**
- **dass** als Schwellenwert für einen Knoten (K) der mit einem Faktor multiplizierte Wert der Bandbreite der Gesamtheit der von dem Knoten (K) wegführenden bzw. zu dem Knoten (K) hinführenden Verbindungsabschnitte (11, 12, 13) verwendet wird, wobei der Faktor eine Zahl zwischen Null und Eins darstellt, und
- für einen Verbindungsabschnitt (12) als Schwellenwert die mit dem Faktor multiplizierte Bandbreite des Verbindungsabschnitts (12) verwendet wird.

5. Verfahren nach Anspruch 2 und 3,
**dadurch gekennzeichnet,**
- **dass** wenn bei einem Knoten (K) eine Absenkung der gesamten Verkehrslast unter den Schwellenwert nicht erzielt wird, der über den dem Verbindungsabschnitt (12) vorgelagerten Knoten (K) geführte Verkehr erniedrigt wird durch ein Verfahren entsprechend Anspruch 1 oder durch ein Verfahren zur Anpassung von Verteilungsgewichten für eine eine Überlast eines Knoten (K) vermeidende Verkehrsverteilung in einem Paketnetz, wobei das Paketnetz mit Knoten (I, E, R, K) und Verbindungsabschnitten (11, 12, 13, r1, r2, r3) gebildet ist und in dem Paketnetz Verkehrsverteilung mit Hilfe von Verteilungsfächern vorgenommen wird,
bei dem
- für die von dem Knoten (K) wegführenden oder die zu dem Knoten (K) hinführenden Verbindungsabschnitte (11,12, 13) die gesamte Verkehrslast ermittelt wird,
- überprüft wird, ob die gesamte Verkehrslast der wegführenden bzw. hinführenden Verbindungsabschnitte (11, 12, 13) einen Schwellenwert überschreitet, und
- bei Überschreiten des Schwellenwertes Verteilungsgewichte von Verbindungsabschnitten (r1, r2, r3), die einem den Knoten (K) beinhaltenden Verteilungsfächer zugehören, so angepasst werden, dass der über den Knoten (K) gelenkte Verkehr erniedrigt wird.

6. Verfahren nach einem der vorhergehenden Ansprüche 1 oder 2,
**dadurch gekennzeichnet,**
- **dass** eines der folgenden Abbruchkriterien verwendet wird:
-- bei einem oder mehreren Durchläufen über alle Knoten (I, E, R, K) bzw. Verbindungsabschnitte (11, 12, 13, r1, r2, r3) des.Netzes erniedrigt sich die Anzahl der Knoten (I, E, R, K) bzw. Verbindungsabschnitte (11, 12, 13, r1, r2, r3) nicht, deren Verkehrslast den Schwellenwert überschreitet,
-- die Summe der Quadrate der Differenz zwischen gesamter Verkehrslast und Schwellenwert, summiert über alle Knoten (I, E, R, K) bzw. Verbindungsabschnitte (11, 12, 13, r1, r2, r3), deren Verkehrslast den Schwellenwert überschreitet, erniedrigt sich bei einem oder mehreren Durchläufen nicht,
-- eine maximale Anzahl an Durchläufen wurde durchgeführt.

7. Verfahren nach einem der vorhergehenden Ansprüche,
**dadurch gekennzeichnet,**
- **dass** zu Beginn des Verfahrens den Verteilungsgewichten Startwerte zugewiesen werden, wobei für einen Knoten (K) die demselben Verteilungsfächer angehörigen von dem Knoten (K) wegführenden oder zu ihm hinführenden Verbindungsabschnitte (11, 12, 13) Verteilungsgewichte nach Maßgabe ihrer relativen Bandbreite zugewiesen bekommen.

8. Verfahren nach einem der vorhergehenden Ansprüche,
**dadurch gekennzeichnet,**
- **dass** bei der Zuweisung von Startwerten der Verteilungsgewichte an Verbindungsabschnitte (11, 12, 13, r1, r2, r3) eine relative Anpassung von Verteilungsgewichten eines Verteilungsfächers nach Maßgabe der Anzahl an Verbindungsabschnitten innerhalb eines Verteilungsfächers, über die Pakete von dem Verbindungsabschnitt zu einem Ziel übertragen werden müssen, im Sinne einer Reduzierung der Anzahl an Verbindungsabschnitten vorgenommen wird.

9. Verfahren nach einem der vorhergehenden Ansprüche, bei dem zuvor eine Gesamtlastüberprüfung durchgeführt wird, bei der
- für jeden Randknoten (I, E) des Netzes der gesamte über den Randknoten (I, E) in das Paketnetz eintretende und der über ihn austretende Verkehr ermittelt wird,
- der gesamte über den Randknoten (I, E) des Netzes eintretende bzw. austretende Verkehr mit dem mit einem Faktor multiplizierten Wert der Bandbreite der Gesamtheit der von dem Randknoten (I, E) wegführenden bzw. zu dem Randknoten (I, E) hinführenden Verbindungsabschnitte (11, 12, 13) verglichen wird, wobei der Faktor eine Zahl zwischen Null und Eins darstellt, und
- das Verfahren abgebrochen wird, wenn der gesamte über den Randknoten (I, E) des Netzes eintretende bzw. austretende Verkehr die mit dem Faktor zwischen Null und Eins multiplizierte gesamte Bandbreite der von dem Randknoten (I, E) wegführenden bzw. zu dem Randknoten (I, E) hinführenden Verbindungsabschnitte (11, 12, 13) überschreitet.

10. Verfahren nach Anspruch 9,
**dadurch gekennzeichnet,**
- **dass** mit Hilfe einer Verkehrsmatrix und den anfänglich zugewiesenen Verteilungsgewichten die Gesamtsumme des Verkehrs über alle Netzabschnitte berechnet wird, und
- **dass** das Verfahren abgebrochen wird, wenn die Gesamtsumme die gesamte über alle Netzabschnitte summierte und mit dem Faktor zwischen Null und Eins multiplizierte Bandbreite der Verbindungsabschnitte (11, 12, 13, r1, r2, r3) des Paketnetzes überschreitet.

11. Verfahren nach einem der vorhergehenden Ansprüche,
**dadurch gekennzeichnet,**
- **dass** bei jeden inneren Knoten des Netzes zwei von dem jeweiligen Knoten wegführende Verbindungsabschnitte angeordnet sind.

## Claims

1. Method for adjusting distribution weights for a traffic distribution in a packet network to avoid overloading a node (K), the packet network being made up of nodes (I, E, R, K) and links (11, 12, 13, r1, r2, r3) and traffic distribution being effected in the packet network with the assistance of distribution fans, in which
- for every node (K) of the packet network
- the overall traffic load is determined for links (11, 12, 13) going from the node (K) or to the node (K),
- it is verified whether the overall traffic load in the outward or inward links (11, 12, 13) exceeds a threshold value and
- if the threshold value is exceeded, distribution weights of links (r1, r2, r3) which are associated with a distribution fan containing the node (K) are adjusted such that the traffic routed via the node (K) is reduced,
- until the volume is below the threshold value for all nodes (I, E, R, K) in the packet network or an abort criterion is satisfied..

2. Method for adjusting distribution weights for a traffic distribution in a packet network to avoid an overload in a link (12), the packet network being made up of nodes (I, E, R, K) and links (11, 12, 13, r1, r2, r3) and traffic being distributed with the assistance of distribution fans,
in which
- for every link (11, 12, 13, r1, r2, r3) of the packet network
- the overall traffic load is determined for the link (12),
- it is verified whether the overall traffic load exceeds a threshold value and
- if the threshold value is exceeded, distribution weights of links (11, 13) which are associated with a distribution fan containing the link are adjusted such that the traffic routed via the link (12) is reduced
- until the volume is below the threshold value for all links (11, 12, 13, r1, r2, r3) in the packet network or an abort criterion is satisfied.

3. Method according to one of claims 1 to 2,
**characterised in that**
- distribution weight adjustment is terminated when the volume is below the threshold value.

4. Method according to one of the preceding claims,
**characterised in that**
- the bandwidth of all the links (11, 12, 13) going from the node (K) or to the node (K) multiplied by a factor is used as the threshold value for a node (K), the factor representing a number between zero and one,
and
- the bandwidth of the link (12) multiplied by the factor is used as the threshold value for a link (12).

5. Method according to claim 2 and 3,
**characterised in that**
- if a reduction in the overall traffic load to below the threshold value is not achieved, the traffic routed via the node (K) front-ending the link (12) is reduced by means of a method according to one claim 1 or by means of a method for adjusting distribution weights for a traffic distribution in a packet network to avoid an overload of a node (K), the packet network being made up of nodes (I, E, R, K) and links (11, 12, 13, r1, r2, r3) and traffic distribution being effected in the packet network with the assistance of distribution fans,
with which
- the overall traffic load is determined for links (11, 12, 13) going from the node (K) or to the node (K)
- it is verified whether the overall traffic load in the outward or inward links (11, 12, 13) exceeds a threshold value and
- if the threshold value is exceeded, distribution weights of links (r1, r2, r3) which are associated with a distribution fan containing the node (K) are adjusted such that the traffic routed via the node (K) is reduced.

6. Method according to one of the preceding claims 1 or 2,
**characterised in that**
- one of the following abort criteria is used:
-- the number of nodes (I, E, R, K) or links (11, 12, 13, r1, r2, r3), the traffic load of which exceeds the threshold value, is not reduced over all the nodes (I, E, R, K) or links (11, 12, 13, r1, r2, r3) in the network with one or more passes,
-- the sum of the squares of the difference between the overall traffic load and the threshold value, added together over all the nodes (I, E, R, K) and links (11, 12, 13, r1, r2, r3), the traffic load of which exceeds the threshold value, is not reduced with one or more passes,
-- a maximum number of passes has been carried out.

7. Method according to one of the preceding claims,
**characterised in that**
- at the start of the method initial values are allocated to the distribution weights, the links (11, 12, 13) going from or to the node (K) and associated with the same distribution fan being allocated distribution weights according to their relative bandwidth for the node (K).

8. Method according to one of the preceding claims,
**characterised in that**
- during the allocation of initial values of the distribution weights to links (11, 12, 13, r1, r2, r3), a relative adjustment of the distribution weight of a distribution fan is carried out according to the number of links within a distribution fan, via which packets have to be transmitted from the link to a destination, so as to reduce the number of links.

9. Method according to one of the preceding claims, with which an overall load verification is carried out first,
in which
- all the traffic entering the network via the edge node (I, E) and the traffic leaving via it is determined for every edge node (I, E) in the network
- all the traffic entering or leaving via the edge nodes (I, E) of the network is compared with the value of the bandwidth of all the links (11, 12, 13) going from the edge node (I, E) or to the edge node (I, E) multiplied by a factor, said factor representing a number between zero and one and
- the method is aborted, if all the inward or outward traffic via the edge nodes (I, E) of the network exceeds the overall bandwidth of the links (11, 12, 13) from the edge node (I, E) or to the edge node (I, E) multiplied by the factor between zero and one.

10. Method according to claim 9,
**characterised in that**
- the total sum of the traffic via all network links is calculated with the assistance of a traffic matrix and the initially allocated distribution weights, and
- the method is aborted, if the total sum exceeds the total bandwidth of the links (11, 12, 13, r1, r2, r3) in the packet network added together over all network links and multiplied by the factor between zero and one.

11. Method according to one of the preceding claims,
**characterised in that**
- two outward links from the respective node are arranged at every internal node in the network.

## Revendications

1. Procédé pour adapter des poids de répartition pour une répartition de trafic évitant une surcharge d'un noeud (K) dans un réseau de paquets, le réseau de paquets étant formé de noeuds (I, E, R, K) et de tronçons de liaison (11, 12, 13, r1, r2, r3) et la répartition du trafic étant effectuée dans le réseau de paquets à l'aide d'éventails de répartition,
dans lequel
- pour chaque noeud (K) du réseau de paquets
-- l'ensemble de la charge de trafic est déterminé pour les tronçons de liaison (11, 12, 13) partant du noeud (K) ou allant au noeud (K),
-- on vérifie si l'ensemble de la charge de trafic des tronçons de liaison (11, 12, 13) partant resp. arrivant dépasse une valeur seuil,
-- en cas de dépassement de la valeur seuil, des poids de répartition de tronçons de liaison (r1, r2, r3), qui appartiennent à un éventail de répartition contenant le noeud (K), sont adaptés de telle sorte que le trafic guidé par le noeud (K) est diminué,
- jusqu'à ce que, pour tous les noeuds (I, E, R, K) du réseau de paquets, la valeur seuil ne soit pas atteinte ou qu'un critère d'interruption soit rempli.

2. Procédé pour adapter des poids de réparation pour une réparation de trafic évitant une surcharge d'un tronçon de liaison (12) dans un réseau de paquets, le réseau de paquets étant formé de noeuds (I, E, R, K) et de tronçons de liaison (11, 12, 13, r1, r2, r3) et la répartition de trafic étant effectuée à l'aide d'éventails de répartition,
dans lequel
- pour chaque tronçon de liaison (11, 12, 13, r1, r2, r3) du réseau de paquets
-- pour le tronçon de liaison (12), la charge de trafic globale est déterminée,
-- on vérifie si la charge de trafic globale dépasse une valeur seuil,
-- en cas de dépassement de la valeur seuil, des poids de répartition de tronçons de liaison (11, 13), qui appartiennent à un éventail de répartition contenant le tronçon de liaison (12), sont adaptés de telle sorte que le trafic guidé par le tronçon de liaison (12) est abaissé,
- jusqu'à ce que pour tous les tronçons de liaison (11, 12, 13, r1, r2, r3) du paquet de réseau, la valeur seuil ne soit pas atteinte ou bien un critère d'interruption soit satisfait.

3. Procédé selon l'une quelconque des revendications 1 à 2,
**caractérisé en ce que**
- l'adaptation de poids de répartition est terminée lorsque la valeur seuil n'est pas atteinte.

4. Procédé selon l'une quelconque des revendications précédentes,
**caractérisé en ce que**
- comme valeur seuil pour un noeud (K), on utilise la valeur multipliée par un facteur, de la largeur de bande de l'ensemble des tronçons de liaison (11, 12, 13) partant du noeud (K) resp. allant au noeud (K), le facteur représentant un nombre compris entre zéro et un, et
- pour un tronçon de liaison (12), on utilise comme valeur, seuil la largeur de bande, multipliée par le facteur, du tronçon de liaison (12).

5. Procédé selon les revendications 2 et 3,
**caractérisé en ce que**
- si, pour un noeud (K), une réduction de la charge de trafic globale au-dessous de la valeur seuil n'est pas obtenue, le trafic guidé par le noeud (K) placé en amont de tronçon de liaison (12) est réduit par un procédé selon la revendication 1 ou par un procédé pour l'adaptation de poids de répartition pour une répartition de trafic évitant une surcharge d'un noeud (K) dans un réseau de paquets, le réseau de paquets étant formé de noeuds (I, E, R, K) et de tronçons de liaison (11, 12, 13, r1, r2, r3) et la répartition du trafic étant effectuée dans le réseau de paquets à l'aide d'éventails de répartition,
dans lequel
- pour les tronçons de liaison (11, 12, 13) partant du noeud (K) ou allant au noeud (K), la charge de trafic globale est déterminée,
- on vérifie si la charge de trafic globale des tronçons de liaison (11, 12, 13) partant resp. arrivant dépasse une valeur seuil et
- en cas de dépassement de la valeur seuil, des poids de répartition de tronçons de liaison (r1, r2, r3), qui appartiennent à un éventail de répartition contenant le noeud (K), sont adaptés de telle sorte que le trafic guidé par le noeud (K) est réduit.

6. Procédé selon l'une quelconque des revendications 1 ou 2 précédentes,
**caractérisé en ce que**
- l'un des critères d'interruption suivants est utilisé :
-- lors d'un passage ou de plusieurs passages par tous les noeuds (I, E, R, K) resp. tronçons de liaison (11, 12, 13, r1, r2, r3) du réseau, le nombre des noeuds (I, E, R, K) resp. tronçons de liaison (11, 12, 13, r1, r2, r3) n'est pas réduit, noeuds ou tronçons dont la charge de trafic dépasse la valeur seuil,
-- la somme du carré de la différence entre la charge de trafic globale et la valeur seuil, cumulée sur tous les noeuds (I, E, R, K) resp. tronçons de liaison (11, 12, 13, r1, r2, r3), dont la charge de trafic dépasse la valeur seuil, ne se réduit pas lors d'un passage ou de plusieurs passages,
-- un nombre maximum de passages est effectué.

7. Procédé selon l'une quelconque des revendications précédentes,
**caractérisé en ce que**
- au début du procédé, des valeurs de démarrage sont attribuées aux poids de répartition, les tronçons de liaison (11, 12, 13) appartenant au même éventail de répartition et partant du noeud (K) ou arrivant à ce noeud (K) recevant pour un noeud (K) des poids de répartition attribués en fonction de leur largeur de bande relative.

8. Procédé selon l'une quelconque des revendications précédentes,
**caractérisé en ce que**
- lors de l'attribution de valeurs de démarrage des poids de répartition à des tronçons de liaison (11, 12, 13, r1, r2, r3), une adaptation relative de poids de répartition d'un éventail de répartition est effectuée en fonction du nombre de tronçons de liaison à l'intérieur d'un éventail de répartition, par lesquels des paquets doivent être transmis du tronçon de liaison à une cible, dans le sens d'une réduction du nombre de tronçons de liaison.

9. Procédé selon l'une quelconque des revendications précédentes, dans lequel un contrôle de charge globale est effectué,
lors duquel
- pour chaque noeud de bordure (I, E) du réseau, l'ensemble du trafic arrivant par le noeud de bordure (I, E) dans le réseau de paquets et le trafic sortant par ce noeud est déterminé,
- l'ensemble du trafic entrant par le noeud de bordure (I, E) du réseau resp. sortant est comparé avec la valeur, multipliée par un facteur, de la largeur de bande de la totalité des tronçons de liaison (11, 12, 13, r1, r2, r3) partant du noeud de bordure (I, E) resp. arrivant au noeud de bordure (I, E), le facteur représentant un nombre entre zéro et un, et
- le procédé est interrompu lorsque l'ensemble du trafic arrivant resp. sortant par le noeud de bordure (I, E) du réseau dépasse la largeur de bande globale, multipliée par le facteur compris entre zéro et un, des tronçons de liaison (11, 12, 13) partant des noeuds de bordure (I, E) resp. allant aux noeuds de bordure (I, E).

10. Procédé selon la revendication 9,
**caractérisé en ce que**
- à l'aide d'une matrice de trafic et des poids de répartition attribués au début, la somme globale du trafic est calculée pour tous les tronçons de réseau, et
- le procédé est interrompu lorsque la somme globale dépasse la largeur de bande globale, cumulée pour tous les tronçons de réseau et multipliée par le facteur compris entre zéro et un, des tronçons de liaison (11, 12, 13, r1, r2, r3) du réseau de paquets.

11. Procédé selon l'une quelconque des revendications précédentes,
**caractérisé en ce que**
- deux tronçons de liaison partant du noeud respectif concerné sont disposés pour chaque noeud intérieur du réseau.
